# EUROPEAN PATENT SPECIFICATION

(11) **EP 2 988 649 B1**
(45) Date of publication and mention of the grant of the patent: **06.09.2017**
(21) Application number: 14731018.9
(22) Date of filing: 23.04.2014
(51) Int. Cl.: A47L 15/42

(54) **SYSTEM FOR SUPPLYING AND TREATING WATER FOR A WASHING MACHINE, IN PARTICULAR A DISHWASHER**
SYSTEM ZUR ZUFÜHRUNG UND AUFBEREITUNG VON WASSER FÜR EINE WASCHMASCHINE, INSBESONDERE EINE GESCHIRRSPÜLMASCHINE
SYSTÈME D'AMENÉE ET DE TRAITEMENT D'EAU POUR UNE MACHINE À LAVER, EN PARTICULIER UN LAVE-VAISSELLE

(30) Priority: 24.04.2013 IT TO20130338
(43) Date of publication of application: 02.03.2016
(73) Proprietor: Bitron S.p.A., 10122 Torino (TO) (IT)
(72) Inventor: BRIGNONE, Enzo, I-12025 Frazione Monastero Dronero (Cuneo) (IT)
(74) Representative: Quinterno, Giuseppe
(86) International application number: PCT/IB2014/060929
(87) International publication number: WO 2014/174451

(56) References cited:
- EP-A1- 0 094 357
- EP-A1- 0 517 205
- EP-A1- 0 741 991
- EP-A1- 1 114 607
- EP-A1- 2 561 790
- DE-A1- 10 027 844
- DE-U1- 29 613 016

## Description

The present invention relates in general to the field of washing machines, and in particular to dishwashers.

More specifically, the present invention relates to a system for supplying and treating water for such a machine, of the type defined in the preamble of Claim 1.

A system for supplying and treating water of the type specified above is known from European Patent Application EP 2 561 790 A1, in the name of the present applicant.

EP 0 741 991 A1 describes a regeneration device including electronic control means designed to vary the volume of the water used for regeneration as a function of the water hardness, the number of washing cycles executed and the total volume of water treated in a given time interval. The volume of water used for each regeneration is determined by controlling the opening time of an electric water supply valve.

Further water treatment systems for dishwashers are described in DE 100 27 844 A1 and EP 1 114 607 A1.

In a dishwasher, as is known, in order to reduce the hardness of the water available at the place of use, the water used for washing the dishes is brought into contact with substances having water-softening properties, such as ion-exchange resins. These substances or resins must be periodically regenerated by a flow of brine formed by passing a certain quantity of water through the salt tank. This quantity can be controlled in various ways, for example by providing a suitable collecting container having an appropriate predetermined volume, or by measuring it with a flow meter, or by opening an electric valve for a predetermined time interval.

In washing machines, and particularly in dishwashers, it is becoming increasingly important to reduce water consumption.

This mainly implies a reduction of the quantity of water used for washing.

However, it is also possible to make an appreciable contribution in this respect by reducing the quantities of water used for the regeneration of the water-softening resins and for the washing of these resins after each regeneration operation.

Indeed, the regeneration of the softening resins generally requires quantities of water of the order of 100 - 200 cc, and the subsequent washing of these resins may require quantities of water of the order of 1500 cc.

One object of the present invention is therefore to propose a system for supplying and treating water which can contribute to the achievement of this aim, by enabling the consumption of water and electricity to be reduced appreciably.

A further object of the present invention is to propose a system for supplying and treating water which enables costs to be reduced appreciably by reducing the quantity of water-softening substances used and the quantity of salt required on each occasion for their regeneration.

This and other objects are achieved according to the invention with a system for supplying and treating water of the type defined above, having the characteristics defined in the attached Claim 1.

Conveniently, in this system the electronic control means may be designed to cause, through the aforesaid electric valve means, the performance of the operations of regeneration and washing of the softening substances with a frequency at least equal to two washing cycles of the machine, when the water hardness indicated by said indicator means lies within a first predetermined range of relatively low values, for example from 10 to 20 German degrees (°d).

Furthermore, said electronic control means may be designed to cause, through the aforesaid electric valve means, the performance of an operation of regeneration and washing of the softening substances in each washing cycle of the machine, with quantities of water for the formation of the brine and for the washing of the softening substances increasing in predetermined ways with an increase in the water hardness indicated by the aforesaid indicator means, when the indicated hardness lies within a second predetermined range of values which are relatively high and greater than the values of said first range. This second range of values of water hardness may extend, for example, from about 20 German degrees upwards.

According to a further embodiment, in a system for supplying and treating water according to the present invention intended for use in a dishwasher capable of washing 12 table settings, the aforesaid first tank has an internal volume capable of containing a volume of not more than 400 cc of ion-exchange softening substances, having an exchange capacity of about 1.9 eq/1.

Typically, this first tank has an at least approximately cylindrical shape. If this tank has a cross section with an average area S (expressed in cm², for example) and a height h (expressed in cm), the ratio S/h is conveniently between about 20 and about 55.

Further embodiments and advantages of the present invention will be apparent from the following detailed description, provided purely by way of non-limiting example, with reference to the attached drawings, in which:
Figure 1 is a schematic representation of a system according to the present invention, shown in a step of the softening treatment of the water used for washing the dishes, and
Figure 2 is a schematic representation of the system of Figure 1, shown in a step of regeneration of the softening substances.

In the drawings, the number 1 indicates the whole of a system for supplying and treating water according to the present invention, in particular for a dishwasher of a known type (not illustrated).

This system 1 comprises a water-softening device which is indicated as a whole by 2, and which will now be described in detail.

In the embodiment illustrated by way of example in the drawings, the water-softening device 2 has a supply line 10, having an upstream portion in which an electric filling valve 12 and a flow gauge 14 are fitted.

After this portion, the supply line 10 has an air gap portion 16.

Downstream of the latter, the line 10 has a branch-off point 18 at which it forms a first and a second branch indicated by 20 and 22 respectively.

The water-softening device 2 further comprises a first tank 24 for containing substances with softening properties, in particular ion-exchange resins. This tank 24 has an inlet opening 26 for a flow of water to be softened and an outlet opening 28 for the flow of softened water.

The number 30 indicates a second tank for containing salt. This tank 30 has a water inlet opening 32 and an outlet opening 34 for a regenerating brine formed following the dissolution of salt in the water.

A line 36, in which a one-way valve 37 is positioned, connects the second tank to the first tank 24; to enable the brine formed in the second tank 30 to flow out towards the first tank 24.

The first branch 20 of the supply line 10 is connected to the inlet opening 26 of the first tank 24, while the second branch 22 is connected to the inlet opening 32 of the second tank 30.

In the embodiment illustrated by way of example, a switching valve 38, particularly an electric valve, is located at the branch-off point 18 of the supply line 10.

The valve 38 has a shutter 39 adapted to cause the water to flow into the first branch 20 or the second branch 22, by closing the free aperture of a first or a second valve seat 40a, 40b which forms the inlet of the corresponding branch 20, 22.

The valve 38 further comprises a supplementary passage 42, which puts the supply line 10 constantly into communication with the first branch 20, independently of the position of the shutter 39.

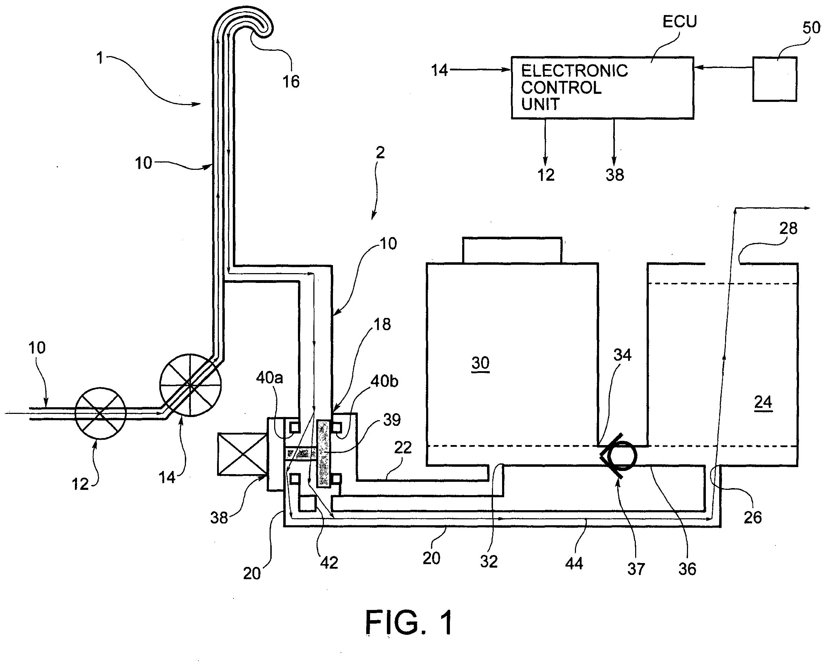

During the step of the softening treatment of the supplied water (Fig. 1), the shutter 39 of the valve 38 assumes a first operating position in which it blocks the outflow from the supply line 10 towards the second branch 22, by closing the aperture of the seat 40b, while it allows the flow into the first branch 20 towards the first tank 24 through the aperture of the seat 40a.

Thus all of the water flowing in the line 10 is directed, through the aperture of the seat 40a or the passage 42, directly into the first branch 20 and then into the first tank 24, where it is softened, as indicated by the path indicated by 44 in Figure 1.

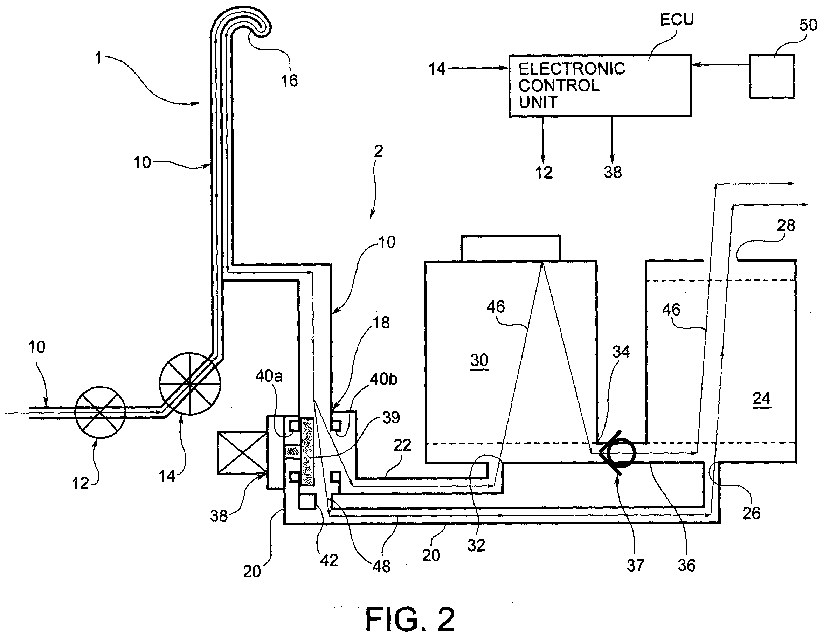

During the step of regeneration of the softening substances (Fig. 2), the shutter 39 of the valve 38 assumes a second operating position in which it allows the flow of water from the supply line 10 towards the second branch 22, by closing the aperture of the seat 40a and leaving open the aperture of the seat 40b.

Thus the water supplied to the second branch 22 is directed into the second tank 30, where it forms a brine which, when it subsequently passes through the first tank 24, regenerates the softening substances (see the path indicated by 46 in Figure 2).

In the embodiment illustrated in the drawings, even during the regeneration step in which the shutter 39 closes the aperture of the inlet seat 40a of the first branch 20, part of the flow of supplied water continues to be directed through the passage 42 into the first branch 20 and thence into the first tank 24 (see the path indicated by 48 in Figure 2). This prevents the passage of the whole supply flow through the salt tank 30, which would be functionally unnecessary and could also cause dangerous blockages.

It should also be noted that the ratio between the flows of water in the first and second branches 20, 22 depends on the apertures of the passage 42 and of the seats 40a, 40b, that is to say on fixed geometrical values, which can be specified with very high precision and low tolerances, thus providing highly precise operation.

In the embodiment described above, the quantities of water used for washing the dishes, forming the regenerating brine and washing the softening substances after the regenerating operations are determined by means of the flow gauge 14. However, it is possible to provide variant embodiments in which, for example, the volume of water used for forming the regenerating brine is determined differently, for example by means of a suitable collecting container having a predetermined volume, or by opening an electric water flow control valve for predetermined time intervals.

The system for supplying and treating water 1 further comprises an indicator device 50 of a known type, adapted to supply signals or data indicative of the hardness of the water used.

The system 1 further comprises an electronic control unit ECU connected to the indicator device 50 and to the flow gauge 14, as well as to the electric valves 12 and 38.

The electronic control unit ECU may be made as a unit specifically dedicated to the system for supplying and treating water 1, or its functions may be implemented using an electronic control unit of the machine with which the system for supplying and treating water 1 is associated.

This control unit ECU is designed to control selectively, in predetermined ways, as a function of the hardness of the water used, indicated by the device 50, and through the electric valves 12 and 38:
- the quantity of water used for forming the brine used for each operation of regenerating the softening substances contained in the tank 24;
- the quantity of water used for washing the softening substances contained in the tank 24, after each regeneration operation; and
- the frequency of the operations of regenerating and washing these water-softening substances.

By providing coordinated control of two or more of these parameters, the system for supplying and treating water according to the invention makes it possible to achieve the objects mentioned in the introduction to the present description.

In particular, the electronic control unit ECU may conveniently be designed to cause, through the valves 12 and 38, the performance of operations of regeneration and washing of the softening substances contained in the tank 24, with a frequency at least equal to two washing cycles in the machine, when the water hardness indicated by the device 50 lies within a first predetermined range of relatively low values, for example between about 10 and about 20 German degrees.

The electronic control unit ECU may also be conveniently designed to cause, through the electric valves 12 and 38, the performance of an operation of regeneration and washing of the softening substances in each washing cycle of the machine, with quantities of water for the formation of the brine and for the washing of the softening substances increasing in predetermined ways with an increase in the water hardness indicated by the indicator 50, when the indicated hardness lies within a second predetermined range of values which are relatively high and greater than the values of the aforesaid first range. This second range of values of water hardness conveniently extends, for example, from about 20 German degrees upwards.

The volume of softening resins used is crucial for the optimization of operating efficiency and the consequent reduction of water and salt consumption for the operations of regenerating the softening substances, and for the reduction of energy consumption and costs.

According to a further aspect of the invention, for a dishwasher capable of washing 12 table settings, the first tank 24, that is to say the tank for the softening substances, has an internal volume capable of containing a volume of not more than 400 cc of ion-exchange softening substances, having an exchange capacity of about 1.9 eq/l.

The tank 24 generally has an at least approximately cylindrical shape. If, as mentioned above, this tank has a cross section having an average area S and a height h expressed in consistent units of measurement (for example, cm² and cm respectively), the ratio S/h is conveniently between about 20 and about 55.

A ratio S/h between these extremes provides high operating efficiency and a reasonable compromise between the requirements of reducing the overall dimensions and reducing the quantity of softening resins used.

Clearly, provided that the principle of the invention is retained, the forms of application and the details of embodiment can be varied widely from what has been described and illustrated purely by way of non-limiting example, without thereby departing from the scope of protection of the invention as defined by the attached claims.

## Claims

1. System for supplying and treating water for a washing machine, in particular a dishwasher, comprising:
- a first tank (24) for containing substances with water-softening properties, having at least one inlet opening (26) for water to be softened and an outlet opening (28) for softened water,
- a second salt-containing tank (30), having at least one water inlet opening (32) and an outlet opening (34) for a regenerating brine formed following the dissolution of the salt in the water,
- a line (36) connecting the second tank (30) to the first tank (34) for the outflow of the brine formed in the second tank (30) towards the first tank (24),
- a water supply line (10) having a branch-off point (18) into a first branch (20) supplying the first tank (24) and into a second branch (22) which leads to the inlet opening (32) of the second tank (30),
- first electric valve means (12) adapted to control the flow of water through said supply line (10),
- second electric valve means (38) adapted to control a flow of water towards and through the second tank (30) for forming the regenerating brine,
- means (14) for determining the amounts of water used for washing the dishes, forming the regenerating brine and washing the softening substances after a regenerating operation; and
- electronic control means (ECU) connected to said determining means (14) and to said first and second electric valve means (12, 38);
the system being **characterized in that** said system further comprises indicator means (50) adapted to provide signals or data indicative of the hardness of the water used, and **in that** the control means (ECU) are designed to control, and if necessary selectively vary, in predetermined ways, as a function of the water hardness indicated by the indicator means (50), and through said first and second electric valve means (12, 38):
* the quantity of water used for forming the brine used for each operation of regenerating the softening substances contained in said first tank (24), and
* the frequency of the operations of regenerating and washing said softening substances.

2. System according to Claim 1, wherein said electronic control means (ECU) are also designed to control and, if necessary, selectively vary, as a function of the water hardness indicated by the indicator means (50) and through said electric valve means (12, 38), the amount of water used for washing said softening substances after a regeneration operation.

3. System according to Claim 1 or 2, wherein said electronic control means (ECU) are designed to cause, through said electric valve means (12, 38), the performance of the operations of regeneration and washing of the softening substances with a frequency at least equal to two washing cycles of the machine, when the water hardness indicated by said indicator means (50) is comprised in a first predetermined range of relatively low values.

4. A system according to Claim 3, wherein said electronic control means (ECU) are designed to cause, through said electric valve means (12, 38), the performance of an operation of regeneration and washing of the softening substances at each washing cycle of the machine, with quantities of water for forming the brine and for washing the softening substances which increase in predetermined ways with an increase in water hardness indicated by the aforesaid indicator means (50), when the indicated water hardness lies within a second predetermined range of values which are relatively high and greater than the values of said first range.

5. System according to Claim 3 or 4, wherein said first range of values of water hardness extends from about 10 to about 20 German degrees.

6. System according to Claim 4 or 5, wherein said second range of values of water hardness extends from about 20 German degrees upwards.

7. System according to any of the preceding claims, for a dishwasher capable of washing 12 table settings, wherein said first tank (24) contains a volume of less than 400 cc of ion-exchange softening substances having an exchange capacity of about 1.9 eq/l.

8. System according to any of the preceding claims, wherein said first tank (24) has an at least approximately cylindrical shape, with a cross section having an average area S, in mm², and a height h, in mm, such that the S/h ratio is between about 20 and about 55.

## Patentansprüche

1. System zur Versorgung und Aufbereitung von Wasser für eine Waschmaschine, insbesondere einer Spülmaschine, mit
- einem ersten Tank (24) zum Aufnehmen von Substanzen mit wasserenthärtenden Eigenschaften, welcher mindestens eine Eingangsöffnung (26) für zu enthärtendes Wasser und eine Ausgangsöffnung (28) für enthärtetes Wasser aufweist,
- einem zweiten salzaufweisenden Tank (30) mit mindestens einer Wassereingangsöffnung (32) und einer Ausgangsöffnung (34) für ein regenerierendes Salzwasser, welches sich nach der Auflösung des Salzes im Wasser gebildet hat,
- einer Leitung (36), die den zweiten Tank (30) mit dem ersten Tank (34) verbindet zum Ausströmen von den im zweiten Tank (30) ausgebildeten Salzwasser in den ersten Tank (24),
- einer Wasserversorgungsleitung (10) mit einem Abzweigungspunkt (18) in einen ersten Zweig (20) zum Versorgen des ersten Tanks (24) und in einen zweiten Zweig (22), der zu der Eingangsöffnung (32) des zweiten Tanks (30) führt,
- ersten elektrischen Ventilmitteln (12), die dazu ausgebildet sind, den Strom des Wassers durch die erste Versorgungsleitung (10) zu steuern,
- zweiten elektrischen Ventilmitteln (38), die dazu ausgebildet sind, die Strömung des Wassers in Richtung und durch den zweiten Tank (30) zur Ausbildung des regenerierenden Salzwassers zu steuern,
- Mitteln (14) zum Bestimmen der Wassermenge zum Waschen des Geschirrs, des Ausbildens des regenerierenden Salzwassers, und Waschsens der enthärtenden Substanzen nach einem Regenerierungsbetrieb, und
- elektronische Steuerungsmittel (ECU), die mit den Bestimmungsmitteln (14) und dem ersten und zweiten elektrischen Ventilmitteln (12, 38) verbunden sind,
wobei das System **dadurch gekennzeichnet ist, dass** das System ferner Anzeigemittel (50) aufweist, die dazu ausgebildet sind,
Signale oder Daten, die indikativ für die Härte des benutzten Wassers sind, bereitzustellen und dass die Steuerungsmittel (ECU) dazu ausgebildet sind, zu steuern, und, wenn notwendig, zu variieren, auf vorbestimmte Weisen, als eine Funktion der Wasserhärte, welche von den Anzeigemitteln (50) angezeigt wurde, und durch die ersten und zweiten elektrischen Ventilmitteln (12, 38):
* die Wassermenge, die zur Ausbildung des Salzwassers verwendet wird, welches verwendet wird für jeden Regenerationsbetrieb der enthärtenden Substanzen, welche in dem ersten Tank (24) enthalten sind, und
* die Frequenz der Regenerations- und Waschbetriebe der enthärtenden Substanzen.

2. System nach Anspruch 1, wobei die elektronische Steuerungsmittel (ECU) auch dazu ausgebildet sind, zu steuern und, wenn nötig, selektiv zu variieren, als eine Funktion der Wasserhärte, welche von den Indikatormitteln (50) angezeigt wurde, und durch die elektrischen Ventilmittel (12, 38) die Wassermenge, die zum Waschen der enthärtenden Substanzen nach einem Regenerationsbetrieb verwendet wurde.

3. System nach Anspruch 1 oder 2, wobei die elektrischen Steuerungsmittel (ECU) dazu ausgebildet ist, durch die elektrischen Ventilmittel (12, 38) die Leistung der Regenerations- und Waschbetriebe der enthärtenden Substanzen mit einer Frequenz, die zumindest gleich zwei Waschzyklen der Maschine ist, zu verursachen, wenn die Wasserhärte, die von den Anzeigemitteln (50) angezeigt wurde, in einem ersten vorbestimmten Bereich eines relativ niedrigen Wertes umfasst ist.

4. System nach Anspruch 3, wobei die elektronische Steuerungsmittel (ECU) dazu ausgebildet ist, durch die elektrischen Ventilmittel (12, 38) die Leistung eines Regenerations- und Waschbetriebs der enthärtenden Substanzen bei jedem Waschzyklus der Maschine zu verursachen, mit Wassermengen zum Ausbilden des Salzwassers und zum Waschen der enthärtenden Substanzen, die auf vorbestimmte Weisen zunehmen mit einer Zunahme an Wasserhärte, welche von vorgenannten Anzeigemitteln (50) angezeigt wurden, wenn die angezeigte Wasserhärte in einem zweiten vorbestimmten Bereich von Werten liegt, die relativ hoch und größer sind als die Werte des ersten Bereichs.

5. System nach Anspruch 3 oder 4, wobei sich der erste Bereich von Werten einer Wasserhärte von ungefähr 10 bis ungefähr 20 deutsche Härtegrade erstreckt.

6. System nach Anspruch 4 oder 5, wobei sich der zweite Bereich von Werten von Wasserhärte oberhalb von ungefähr 20 deutsche Härtegrade erstreckt.

7. System nach einem der vorhergehenden Ansprüche für eine Spülmaschine, die zwölf Tischgarnituren waschen kann, wobei der erste Tank (24) ein Volumen von weniger als 400 cc von Ionenaustauschenthärtersubstanzen mit einer Austauschkapazität von ungefähr 1,9 eq/l umfasst.

8. System nach einem der vorhergehenden Ansprüche, wobei der erste Tank (24) eine zumindest ungefähre Zylinderform aufweist mit einem Querschnitt mit einer Durchschnittsfläche S in mm² und einer Höhe h in mm, so dass das S/h-Verhältnis zwischen ungefähr 20 und ungefähr 55 liegt.

## Revendications

1. Système pour amener et traiter de l'eau pour une machine à laver, en particulier un lave-vaisselle, comprenant :
- un premier réservoir (24) pour contenir des substances ayant des propriétés d'adoucissement d'eau, ayant au moins une ouverture d'entrée (26) pour l'eau à adoucir et une ouverture de sortie (28) pour l'eau adoucie,
- un second réservoir contenant du sel (30), ayant au moins une ouverture d'entrée d'eau (32) et une ouverture de sortie (34) pour une saumure de régénération formée à la suite de la dissolution du sel dans l'eau,
- une conduite (36) connectant le second réservoir (30) au premier réservoir (34) pour l'écoulement sortant de la saumure formée dans le second réservoir (30) vers le premier réservoir (24),
- une conduite d'amenée d'eau (10) possédant un point de bifurcation (18) en une première branche (20) alimentant le premier réservoir (24) et en une seconde branche (22) qui mène à l'ouverture d'entrée (32) du second réservoir (30),
- un premier dispositif de vanne électrique (12) adapté pour commander l'écoulement d'eau à travers ladite conduite d'amenée (10),
- un second dispositif de vanne électrique (38) adapté pour commander un écoulement d'eau vers et à travers le second réservoir (30) pour former la saumure de régénération,
- un moyen (14) pour déterminer les quantités d'eau utilisées pour laver la vaisselle, former la saumure de régénération et laver les substances d'adoucissement après une opération de régénération ; et
- un moyen de commande électronique (ECU) connecté audit moyen de détermination (14) et auxdits premier et second dispositifs de vannes électriques (12, 38) ;
le système étant **caractérisé en ce que** ledit système comprend en outre un moyen indicateur (50) adapté pour fournir des signaux ou données indicatifs de la dureté de l'eau utilisée, et **en ce que** le moyen de commande (ECU) est conçu pour commander, et si nécessaire faire varier sélectivement, de manières prédéterminées, en fonction de la dureté de l'eau indiquée par le moyen indicateur (50), et par le biais desdits premier et second dispositifs de vannes électriques (12, 38) :
* la quantité d'eau utilisée pour former la saumure utilisée pour chaque opération de régénération des substances d'adoucissement contenues dans ledit premier réservoir (24), et
* la fréquence des opérations de régénération et de lavage desdites substances d'adoucissement.

2. Système selon la revendication 1, dans lequel ledit moyen de commande électronique (ECU) est également conçu pour commander et, si nécessaire, faire varier sélectivement, en fonction de la dureté de l'eau indiquée par le moyen indicateur (50) et par le biais desdits dispositifs de vannes électriques (12, 38), la quantité d'eau utilisée pour laver lesdites substances d'adoucissement après une opération de régénération.

3. Système selon la revendication 1 ou 2, dans lequel ledit moyen de commande électronique (ECU) est conçu pour causer, par le biais desdits dispositifs de vannes électriques (12, 38), la réalisation des opérations de régénération et de lavage des substances d'adoucissement avec une fréquence au moins égale à deux cycles de lavage de la machine, quand la dureté de l'eau indiquée par ledit moyen indicateur (50) est comprise dans une première plage prédéterminée de valeurs relativement faibles.

4. Système selon la revendication 3, dans lequel ledit moyen de commande électronique (ECU) est conçu pour causer, par le biais desdits dispositifs de vannes électriques (12, 38), la réalisation d'une opération de régénération et de lavage des substances d'adoucissement à chaque cycle de lavage de la machine, avec des quantités d'eau pour former la saumure et pour laver les substances d'adoucissement qui augmentent de manières prédéterminées avec une augmentation de la dureté de l'eau indiquée par le moyen indicateur (50) précité, quand la dureté de l'eau indiquée se trouve dans une seconde plage prédéterminée de valeurs qui sont relativement élevées et supérieures aux valeurs de ladite première plage.

5. Système selon la revendication 3 ou 4, dans lequel ladite première plage de valeurs de dureté de l'eau s'étend d'environ 10 à environ 20 degrés allemands.

6. Système selon la revendication 4 ou 5, dans lequel ladite seconde plage de valeurs de dureté de l'eau s'étend depuis environ 20 degrés allemands vers le haut.

7. Système selon l'une quelconque des revendications précédentes, pour un lave-vaisselle capable de laver 12 couverts, dans lequel ledit premier réservoir (24) contient un volume de moins de 400 cc de substances d'adoucissement à échange ionique ayant une capacité d'échange d'environ 1,9 eq/l.

8. Système selon l'une quelconque des revendications précédentes, dans lequel ledit premier réservoir (24) a une forme au moins approximativement cylindrique, avec une section transversale ayant une superficie moyenne S, en mm², et une hauteur h, en mm, de telle sorte que le rapport S/h est compris entre environ 20 et environ 55.
